# EUROPÄISCHE PATENTSCHRIFT

(11) **EP 0 814 348 B1**
(45) Veröffentlichungstag und Bekanntmachung des Hinweises auf die Patenterteilung: **10.12.2003**
(21) Anmeldenummer: 97107272.3
(22) Anmeldetag: 02.05.1997
(51) Int. Cl.: G01S 13/93

(54) **Messverfahren für den Abstand zwischen einem Kraftfahrzeug und einem Objekt**
Method for measuring the distance between a vehicle and an object
Procédé pour mesurer la distance entre un véhicule et un objet

(30) Priorität: 17.06.1996 DE 19624043
(43) Veröffentlichungstag der Anmeldung: 29.12.1997
(73) Patentinhaber: Bayerische Motoren Werke Aktiengesellschaft, 80788 München (DE)
(72) Erfinder: Donges, Edmund, Dr., 82256 Fürstenfeldbruck (DE)

(56) Entgegenhaltungen:
- US-A- 3 750 169
- US-A- 5 247 306
- US-A- 5 359 331
- US-A- 5 467 072
- US-A- 5 495 252

## Beschreibung

Die Erfindung bezieht sich auf ein Meßverfahren, wie es aus der deutschen Patentanmeldung 195 01 612 bekannt ist. Beim bekannten Verfahren sind die beiden Meßvorrichtungen völlig unabhängig voneinander und können beispielsweise auf unterschiedlicher Basis arbeiten. So kann die Meßvorrichtung für den kleinen Entfernungsbereich auf Ultraschallbasis, die Meßvorrichtung für den größeren Entfernungsbereich auf Radar- oder Laserbasis arbeiten.

Der Erfindung liegt die Aufgabe zugrunde, das Meßverfahren der eingangs genannten Art insoweit zu vereinfachen, als die dafür erforderliche Meßapparatur vereinfacht ist.

Die Erfindung löst diese Ausgabe durch die Merkmale des Patentanspruchs 1.

Es ist nunmehr lediglich ein einziger Sensor erforderlich, der den gesamten Entfernungsbereich abtastet. Der Sensor kann auf Laser- oder Radarbasis arbeiten. Die Verwendung von Ultraschall dürfte in der Regel dann ausscheiden, wenn es sich um einen insgesamt relativ großen Entfernungsbereich von über zehn Meter handelt.

Der Sensor schickt sein Testsignal, vorzugsweise ein periodisch wiederholtes frequenzmoduliertes Radarsignal (FMCW), aus. Die von einem Objekt reflektierten Signale werden mit einem einzigen Empfänger aufgenommen und den beiden Analyseeinrichtungen zugeführt. Dort wird das Eingangssignal mit Analyseverfahren behandelt, die für den jeweiligen Entfernungsbereich charakteristisch sind.

Das Ausgangssignal der beiden Analyseeinrichtungen wird wie beim Hauptpatent entsprechend der jeweiligen Entfernung des Meßbereichs unterschiedlich gewichtet.

Die Analyseverfahren für die jeweiligen Meßbereiche können verschieden gestaltet sein. Mit besonders guter Auflösegenauigkeit ist für den kleinen Entfernungsbereich ein Korrelationsverfahren geeignet. Dabei wird das reflektierte Signal mit einem Referenzsignal korreliert, beispielsweise einer Autokorrelation unterzogen und so die Entfernung des jeweiligen Objekts bestimmt.

Für den größeren Entfernungsbereich sind ebenfalls verschiedene Meßverfahren bekannt. In Versuchen hat sich die Verwendung einer Spektralanalyse als besonders vorteilhaft herausgestellt. Dabei wird ein Radarsignal in der Sendefrequenz in geeigneter Weise, z. B. sägezahnförmig oder dreiecksförmig, moduliert und aus dem Frequenzversatz mittels einer Spektralanalyse die Entfernung bestimmt. auch ist es möglich, die Entfernung durch die Laufzeit eines Radarimpulses zu bestimmen, der während seiner Aussendung frequenzmoduliert wird.

Anhand der Zeichnung ist die Erfindung weiter erläutert. Es zeigt
- Figur 1: ein Blockschaltbild zur Erläuterung des Meßverfahrens nach dem Hauptpatent und
- Figur 2: ein Blockschaltbild zur Erläuterung des erfindungsgemäßen Verfahrens.

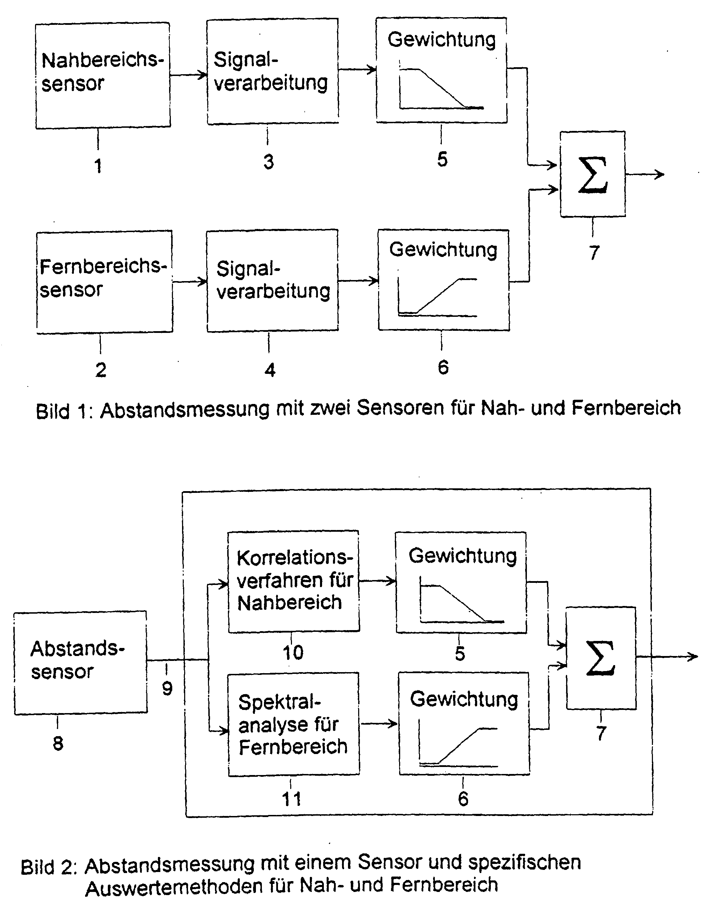

Bei dem in Figur 1 gezeigten Verfahren werden zwei voneinander unabhängige Sensoren 1 und 2 für den Nah- bzw. den Fernbereich eingesetzt. Über eine nachgeschaltete Nachsignalverarbeitung 3 und 4 entsprechend dem Meßbereich durchgeführte Gewichtung in. entsprechenden Einrichtungen 5 und 6 sowie eine sich daran anschließende Summierung der Ausgangssignale der Einrichtungen 5 und 6 in einem Summierglied 7 ergibt sich damit eine Aussage über die Entfernung eines Objekts vor bzw. bei entsprechender Ausrichtung der beiden Sensoren hinter bzw. seitlich vom Kraftfahrzeug.

Bei dem in Figur 2 dargestellten erfindungsgemäßen Verfahren ist ein einziger Abstandssensor 8 vorgesehen, der den gesamten aus Nah- und Fernbereich und bestehenden Untersuchungsbereich abtastet. Es kann sich dabei um einen Radarsender handeln, der in zeitlich regelmäßigen Abstand in den Untersuchungsbereich ein Radarsignal aussendet. An einem Objekt bzw. auch von mehreren Objekten im Untersuchungsbereich wird das Signal reflektiert und geht in einem nicht dargestellten Empfänger, der beispielsweise zusammen mit dem Sender eine Baueinheit bildet, ein. Dieses Eingangssignal wird über eine einzige Leitung 9 zwei Analyseeinrichtungen 10 und 11 zugeführt, von denen die Einrichtung 10 eine Information dann liefert, wenn sich das Hindernis im Nahbereich (von 0 bis 5 m) befindet bzw. die Einrichtung 11 eine Information dann liefert, wenn sich das Objekt im Fembereich (von 5 bis 100 m) befindet. Wie beim Verfahren von Figur 1 sind Einrichtungen 5 und 6 den jeweiligen Analyseeinrichtungen 10 und 11 nachgeschaltet, deren Ausgangssignale wiederum dem Summierglied 7 zugeführt sind.

Die Analyseeinrichtung 10 für den Nahbereich arbeitet biespielsweise mit einem Korrelationsverfahren oder alternativ mit einer Spektralanalyse nach dem FFT-Verfahren unter Verwendung einer Signalverzögerungsleitung.

Die Analyseeinrichtung 11 für den Fembereich führt eine Spektralanalyse durch. Alternativ dazu so ist es auch möglich, Messungen der Laufzeit eines Radarimpulses durchzuführen.

Damit ist es möglich, mit nur einem einzigen Sender und Empfänger den gesamten Untersuchungsbereich abzutasten und unabhängig von der Entfernung des Objekts eine exakte Information über dessen Abstand zu erhalten.

## Patentansprüche

1. Messverfahren für den Abstand zwischen einem Kraftfahrzeug und einem Objekt, bei dem im Kraftfahrzeug bei einer kleinen Objektentfemung die Ausgangssignale einer ersten Messvorrichtung mit entsprechendem Messbereich und bei einer größeren Objektentfemung die Ausgangssignale einer zweiten Messvorrichtung mit entsprechend größerem Messbereich dominierend berücksichtigt werden,
**dadurch gekennzeichnet,**
**dass** die Messvorrichtungen als Analyseeinrichtungen ausgeführt sind, dass den Analyseeinrichtungen gleichzeitig das Ausgangssignal eines einzigen Empfängers für einen einzigen Abstandsgeber als Eingangssignal zugeführt wird und dass die Analyseeinrichtungen dieses Eingangssignals mit einem für den kleineren bzw. den größeren Entfernungsbereich charakteristischen Analyseverfahren gleichzeitig auswerten und durch Summierung der von den Analyseeinrichtungen gelieferten Ausgangssignale eine für die Objektentfernung charakteristische Information liefern.

2. Meßverfahren nach Anspruch 1,
**dadurch gekennzeichnet,**
**daß** das Analyseverfahren für den kleinen Entfernungsbereich ein Korrelationsverfahren ist.

3. Meßverfahren nach Anspruch 1 oder 2,
**dadurch gekennzeichnet,**
**daß** das Analyseverfahren für den größeren Entfernungsbereich eine Spektralanalyse ist.

## Claims

1. A method for measuring the distance between a motor vehicle and an object, in which predominately for a small object distance the output signals of a first measuring device with a corresponding measurement range and for larger object distances the output signals of a second measuring device with a correspondingly larger range of measurement are considered, **characterised in that**, the measuring devices are constructed as analysing devices, that the output signal of a single receiver for a single distance transmitter is taken simultaneously to the analysing devices and that the analysing devices evaluate this input signal simultaneously using a method characteristic for the shorter or the longer distance range and by summing the output signals delivered from the analysing devices deliver characteristic information for the distance of the object.

2. A measurement process according to claim 1, **characterised in that** the method of analysis for the range of short distances is a correlation method.

3. A measurement process according to claim 1 or 2, **characterised in that** the method of analysis for the range of greater distances is spectrum analysis.

## Revendications

1. Procédé de mesure de la distance entre un véhicule automobile et un objet, dans lequel sont pris en compte de manière dominante, en présence d'un petit éloignement de l'objet, les signaux de sortie d'un premier dispositif de mesure avec une plage de mesure appropriée, et en présence d'un grand éloignement de l'objet, les signaux de sortie d'un deuxième dispositif de mesure avec une plage de mesure appropriée plus grande,
**caractérisé en ce que**
les dispositifs de mesure sont des dispositifs d'analyse ; ces dispositifs d'analyse reçoivent en même temps comme signal d'entrée le signal de sortie d'un seul récepteur pour un seul capteur de distance, et ces dispositifs analysent en même temps le signal d'entrée selon un procédé caractéristique pour la zone d'éloignement plus proche ou pour la zone d'éloignement plus lointaine, fournissant ainsi une information caractéristique relative à l'éloignement de l'objet suite à une totalisation des signaux de sortie fournis par les dispositifs d'analyse.

2. Procédé de mesure selon la revendication 1,
**caractérisé en ce que**
le procédé d'analyse pour la zone d'éloignement proche est un procédé de corrélation.

3. Procédé de mesure selon la revendication 1 ou 2,
**caractérisé en ce que**
le procédé d'analyse pour la zone d'éloignement plus lointaine est une analyse spectrale.
